# DEMANDE DE BREVET EUROPEEN

(11) **EP 2 447 956 A1**
(43) Date de publication de la demande: **02.05.2012**
(21) Numéro de dépôt: 11185046.7
(22) Date de dépôt: 13.10.2011
(51) Int. Cl.: H01B 12/06, H01B 13/004, H01B 13/26, H01B 5/06, H01B 5/14

(54) **Conducteur de transport d'energie electrique**

(30) Priorité: 27.10.2010 FR 1058844
(71) Demandeur: Nexans, 75008 Paris (FR)
(72) Inventeur: Bruzek, Christian-Eric, 59141 THUN ST MARTIN (FR); Allais, Arnaud, 69400 LIMAS (FR); Theune, Claus-Friedrich, 30982 Pattensen (DE)
(74) Mandataire: Lenne, Laurence

(57) **Abrégé**

L'invention concerne un conducteur de transport d'énergie électrique comportant un support cylindrique (1) revêtu d'une bande de matériau métallique (2), comprenant éventuellement un matériau supraconducteur, disposée longitudinalement autour dudit support (1) selon une forme de tube, ses bords longitudinaux étant soudés l'un à l'autre selon une ligne de soudure (3).

Selon l'invention, ledit support (1) présente une rainure (4, 4') disposée sous ladite ligne de soudure (3).

## Description

L'invention concerne un conducteur de transport d'énergie électrique.

Elle se rapporte plus précisément à un conducteur comportant un support cylindrique revêtu d'une bande de matériau métallique, comprenant éventuellement un matériau supraconducteur, disposée longitudinalement autour dudit support selon une forme de tube, ses bords longitudinaux étant soudés l'un à l'autre selon une ligne de soudure.

Pour ce type de conducteur, la bande peut être constituée
- d'un matériau conducteur classique, par exemple en cuivre sur un support en aluminium,
- d'un substrat métallique de nickel ou alliage de nickel, ou d'acier, destiné au dépôt, après soudure, d'une ou de plusieurs couches céramiques comprenant au moins une couche de supraconducteur,
- d'un substrat métallique, déjà revêtu d'une ou de plusieurs couches céramiques non supraconductrice(s), destiné au dépôt, après soudure, d'au moins une couche de supraconducteur,
- d'un substrat métallique déjà revêtu de plusieurs couches céramiques dont au moins une couche de supraconducteur.

Par exemple, le document de brevet GB 1 275 985 décrit un tel conducteur comportant un support cylindrique revêtu d'une bande comprenant des matériaux supraconducteurs disposée longitudinalement autour dudit support selon une forme de tube, ses bords longitudinaux étant soudés l'un à l'autre selon une ligne de soudure.

Ce type de conducteur est fabriqué avec une opération de rétreint.

La bande de matériau métallique, comprenant éventuellement un matériau supraconducteur, est disposée longitudinalement autour du support, ses bords longitudinaux étant soudés l'un à l'autre selon une ligne de soudure, de préférence fabriquée par soudure au laser ou par soudure à l'arc électrique sous gaz protecteur TIG (acronyme de « Tungsten Inert Gas »), puis rétreinte autour du jonc. Ce tube est rétreint sur le jonc avec une réduction de surface comprise entre 10 et 15%. La bande est alors plaquée sur le support.

La fabrication par rétreint après soudure est à ce jour nécessaire car, pour réaliser la soudure, il est indispensable d'avoir un espace vide sous la ligne de soudure. Cette soudure du tube formé par la bande est donc réalisée sur un diamètre supérieur au diamètre sur le produit final, puis ce tube est rétreint pour être plaqué sur le support cylindrique.

Cependant, il s'avère que cette opération de rétreint est préjudiciable aux propriétés mécaniques, thermiques et électriques du tube en matériau métallique, comprenant éventuellement un matériau supraconducteur.

Cette opération de rétreint peut endommager l'orientation des grains de surface et/ou une couche en matériau céramique dont il est revêtu.

L'invention résout ce problème en assurant la fabrication d'un tel conducteur sans nécessité d'opération de rétreint.

Pour ce faire, l'invention propose un conducteur de transport d'énergie électrique comportant un support cylindrique revêtu d'une bande de matériau métallique, comprenant éventuellement un matériau supraconducteur, disposée longitudinalement autour dudit support selon une forme de tube, ses bords longitudinaux étant soudés l'un à l'autre selon une ligne de soudure, caractérisé en ce que ledit support présente une rainure disposée sous ladite ligne de soudure.

Selon un premier mode de réalisation préféré, ladite rainure de formée dans ledit support cylindrique est de section sensiblement demi-circulaire.

Selon un second mode de réalisation préféré, ladite rainure est formée au moyen d'un méplat formé dans ledit support cylindrique.

Ladite rainure peut avoir une profondeur comprise entre 0,1 et 0,2 mm.

Ladite bande peut présenter une épaisseur comprise entre 20 et 150 microns.

Ledit tube soudé formé par ladite bande peut présenter un diamètre externe de 0,5 à 3 mm.

L'invention est décrite au moyen de figures ne représentant que des modes de réalisation préférés de l'invention.
La figure 1 est une vue en coupe transversale d'un conducteur conforme à l'invention selon un premier mode de réalisation.
La figure 2 est une vue en coupe transversale d'un conducteur conforme à l'invention selon un second mode de réalisation.

Comme illustré sur les figures un conducteur de transport d'énergie électrique conforme à l'invention comporte un support cylindrique 1, qui peut être plein comme représenté ou être tubulaire creux, revêtu d'une bande de matériau métallique 2, comportant éventuellement un dépôt supraconducteur, disposée longitudinalement autour du support 1 selon une forme de tube, ses bords longitudinaux étant soudés l'un à l'autre selon une ligne de soudure 3.

Ce support 1 présente une rainure 4, 4' disposée sous la ligne de soudure.

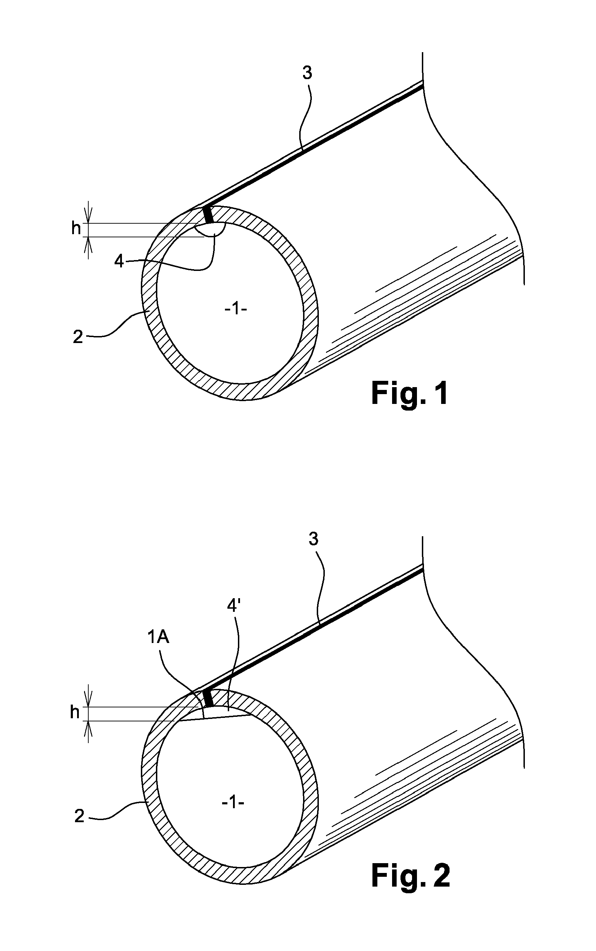

Selon un premier mode de réalisation représenté sur la figure 1, la rainure 4 formée dans le support cylindrique 1 est de section sensiblement demi-circulaire.

Selon un second mode de réalisation préféré, la rainure 4' est formée au moyen d'un méplat 1A formé dans le support cylindrique 1.

La rainure 4, 4' a de préférence une profondeur h comprise entre 0,1 et 0,2 mm, sachant que la bande de matériau métallique, comportant éventuellement un dépôt supraconducteur 2, peut présenter une épaisseur comprise entre 20 et 150 microns et que le tube soudé formé par cette bande peut présenter un diamètre externe de 0,5 à 3 mm.

## Revendications

1. Conducteur de transport d'énergie électrique comportant un support cylindrique (1) revêtu d'une bande de matériau métallique (2), comprenant éventuellement un matériau supraconducteur, disposée longitudinalement autour dudit support (1) selon une forme de tube, ses bords longitudinaux étant soudés l'un à l'autre selon une ligne de soudure (3), **caractérisé en ce que** ledit support (1) présente une rainure (4, 4') disposée sous ladite ligne de soudure (3).

2. Conducteur selon la revendication 1, **caractérisé en ce que** ladite rainure (4) formée dans ledit support cylindrique (1) est de section sensiblement demi-circulaire.

3. Conducteur selon la revendication 1, **caractérisé en ce que** ladite rainure (4') est formée au moyen d'un méplat (1A) formé dans ledit support cylindrique.

4. Conducteur selon l'une des revendications précédentes, **caractérisé en ce que** ladite rainure (4, 4') a une profondeur (h) comprise entre 0,1 et 0,2 mm.

5. Conducteur selon l'une des revendications précédentes, **caractérisé en ce que** ladite bande présente une épaisseur comprise entre 20 et 150 microns.

6. Conducteur selon l'une des revendications précédentes, **caractérisé en ce que** ledit tube soudé formé par ladite bande (2) présente un diamètre externe de 0,5 à 3 mm.
